# EUROPEAN PATENT APPLICATION

(11) **EP 4 415 367 A1**
(43) Date of publication of application: **14.08.2024**
(21) Application number: 22878201.7
(22) Date of filing: 17.08.2022
(51) Int. Cl.: H04N 21/233, G10L 25/51, G10L 25/63, G10L 25/72

(54) **INFORMATION PROCESSING DEVICE, INFORMATION PROCESSING METHOD, AND STORAGE MEDIUM**

(30) Priority: 06.10.2021 JP 2021164748
(71) Applicant: Sony Group Corporation, Tokyo 108-0075 (JP)
(72) Inventor: KATSUMATA, Mitsuru, Tokyo 108-0075 (JP); ABE, Kenta, Tokyo 108-0075 (JP)
(74) Representative: D Young & Co LLP
(86) International application number: PCT/JP2022/031034
(87) International publication number: WO 2023/058330

(57) **Abstract**

An information processing device, an information processing method, and a storage medium that can further reduce the load in generating voice data of a viewer are provided.

The information processing device includes a control unit that acquires voice metadata indicating information regarding voice sound of a viewer from one or more information processing terminals in real time, and, on the basis of the acquired voice metadata, performs control to generate viewer voice data for output, using voice data prepared in advance.

## Description

### TECHNICAL FIELD

The present disclosure relates to an information processing device, an information processing method, and a storage medium.

### BACKGROUND ART

An event such as a sports event or a live concert can be experienced not only at the venue of the event but also through TV broadcasting or an Internet delivery. In particular, due to the spread and user-friendliness of the Internet, event deliveries are performed in real time these days, and many viewers can participate from a public viewing site, home, and the like. Here, one of the major differences between the event experience in an actual venue and the event experience through an Internet delivery or the like is that there is no means to convey reactions such as applause and cheering from a viewer to the performer and the other viewers. The viewer's reactions such as applause and cheering lead to an increase in motivation of the performer and further excitement among the audience, and can be an important factor in an event.

Regarding a technology for sharing such reactions of viewers, for example, Patent Document 1 mentioned below discloses that voice sound of each viewer (remote user) viewing content at a remote place is collected, the data is transmitted to a server, a plurality of pieces of voice data is added to the data by the server, and the resultant data is delivered to each remote user, so that reactions are shared among the remote users.

### CITATION LIST

### PATENT DOCUMENT

Patent Document 1: Japanese Patent Application Laid-Open No.2012-129800

### SUMMARY OF THE INVENTION

### PROBLEMS TO BE SOLVED BY THE INVENTION

By the above technology according to Patent Document 1, however, the processing load on the server is high, and a larger communication capacity becomes necessary to constantly upload voice data collected during a live stream onto the server. Therefore, a delay might occur as well.

Therefore, the present disclosure suggests an information processing device, an information processing method, and a storage medium that can further reduce the load in generating voice data of a viewer.

### SOLUTIONS TO PROBLEMS

The present disclosure suggests an information processing device including a control unit that acquires voice metadata indicating information regarding voice sound of a viewer from one or more information processing terminals in real time, and, on the basis of the acquired voice metadata, performs control to generate viewer voice data for output, using voice data prepared in advance.

The present disclosure suggests an information processing method implemented by a processor, the information processing method including: acquiring voice metadata indicating information regarding voice sound of a viewer from one or more information processing terminals in real time; and, on the basis of the acquired voice metadata, performing control to generate viewer voice data for output, using voice data prepared in advance.

The present disclosure suggests a storage medium storing a program for causing a computer to function as a control unit that acquires voice metadata indicating information regarding voice sound of a viewer from one or more information processing terminals in real time, and, on the basis of the acquired voice metadata, performs control to generate viewer voice data for output, using voice data prepared in advance.

### BRIEF DESCRIPTION OF DRAWINGS

Fig. 1 is a diagram for explaining an overview of a voice data generation system according to an embodiment of the present disclosure.
Fig. 2 is a block diagram illustrating an example of the configurations of a server and a viewer terminal according to the present embodiment.
Fig. 3 is a sequence diagram illustrating an example flow in a voice data generation process according to the present embodiment.
Fig. 4 is a diagram for explaining data transmission in the voice data generation process according to the present embodiment.
Fig. 5 is a diagram for explaining control for changing viewer voice data depending on scenes in an event.
Fig. 6 is a sequence chart illustrating an example flow in a voice data generation process using labeling information according to the present embodiment.

### MODE FOR CARRYING OUT THE INVENTION

The following is a detailed description of a preferred embodiment of the present disclosure, with reference to the accompanying drawings. Note that, in the specification and the drawings, components having substantially the same functional configurations are denoted by the same reference signs, and explanation of them is not repeated.

Further, explanation will be made in the following order.
1. Overview of a voice data generation system according to an embodiment of the present disclosure
2. Example configurations
2-1. Example configuration of a server 20
2-2. Example configuration of a viewer terminal 10
3. Operation process
4. Specific examples
4-1. Viewer voice data generation depending on the number of viewers
4-2. Viewer voice data generation depending on gender or emotion
4-3. Viewer voice data generation depending on characteristics
4-4. Viewer voice data generation depending on viewing environments
4-5. Viewer voice data generation depending on the number of viewers present in the same place
4-6. Viewer voice data generation depending on virtual seat areas
4-7. Viewer voice data generation depending on validity/invalidity of a sound collection unit
4-8. Viewer voice data generation depending on scenes in an event
4-9. Viewer voice data generation depending on labeling
4-10. Combined use of voice data and voice metadata
4-11. Use of voice metadata in an archive delivery
5. Additional notes

### <<1. Overview of a Voice Data Generation System According to an Embodiment of the Present Disclosure>>

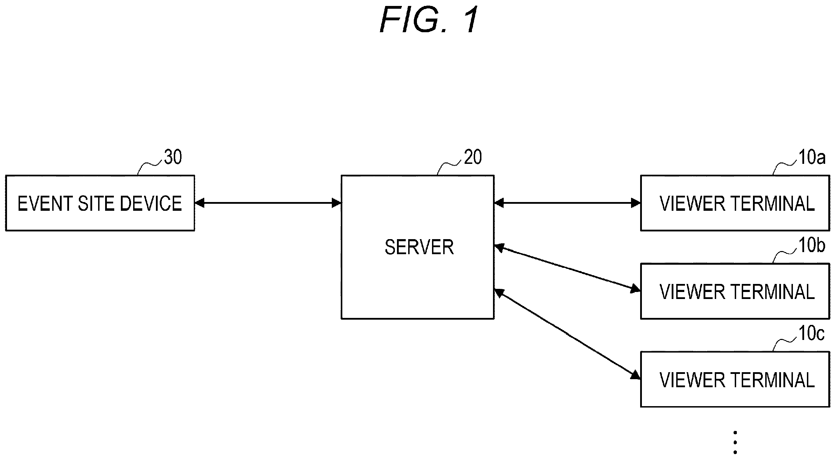

Fig. 1 is a diagram for explaining an overview of a voice data generation system according to an embodiment of the present disclosure. As illustrated in Fig. 1, the voice data generation system according to the present embodiment includes an event site device 30, a server 20, and viewer terminals 10.

The event site device 30 acquires a video image and sound of the site where an event is being held, and transmits the video image and the sound to the server 20. The event site device 30 may include a plurality of devices. The event site may be a facility (such as an arena or a concert venue) that has a stage and audience seats, or may be a recording room (recording studio).

The server 20 is an information processing device that performs control to distribute the video image and the sound of the event site received from the event site device 30 to the viewer terminals 10 in real time.

The viewer terminals 10 (10a to 10c,...) are information processing terminals that are used by a viewers to view an event site. For example, a viewer terminal 10 may be formed with a smartphone, a tablet terminal, a personal computer (PC), a head mounted display (HMD) mounted on the head, a projector, a television device, a game console, or the like. An HMD may have a non-transmissive display unit that covers the entire field of view, or may have a transmissive display unit. The viewer terminals 10 are communicably connected to the server 20, and output the video image and the sound of the event site received from the server 20.

### (Review of Problems)

Here, as described above, one of the major differences between the event experience in an actual venue and the event experience through an Internet delivery or the like is that there is no means to convey reactions such as applause and cheering from a viewer to the performer and the other viewers. The viewer's reactions such as applause and cheering lead to an increase in motivation of the performer and further excitement among the audience, and can be an important factor in an event. It is also conceivable to collect the voice sound of each viewer (remote user), transmit the collected voice sound to a server, perform voice processing at the server, add a plurality of pieces of voice data, and distribute the resultant to each remote user. However, the processing load on the server is high, and a larger communication capacity becomes necessary to constantly upload voice data collected during a live stream onto the server. Therefore, a delay might occur as well.

In view of this, the information processing system according to the present disclosure uses voice metadata to enable a further decrease in the load in generating voice data of a viewer.

Specifically, while outputting a video image and sound of an event site, a viewer terminal 10 generates voice metadata indicating information regarding the viewer's voice sound, and transmits the voice metadata to the server 20. The server 20 acquires voice metadata from one or more viewer terminals 10 in real time, and generates viewer voice data for output on the basis of the acquired voice metadata, using voice data prepared in advance. The viewer voice data can be said to voice data of the entire viewers.

For example, the server 20 counts the number of viewers who are cheering on the basis of the voice metadata acquired from the respective viewer terminals 10, selects the viewer voice data corresponding to the number of viewers from viewer voice data of a specific number of viewers prepared in advance, and sets the viewer voice data for output. The server 20 then transmits the generated viewer voice data to the event site device 30 and one or more viewer terminals 10. The event site device 30 can output the viewer voice data from speakers or the like installed in the event site, and feed back the viewers' reactions to the performer in real time. Each viewer terminal 10 can provide the viewer with the reactions from the other viewers, by outputting the viewer voice data.

In the present embodiment, the use of voice metadata can reduce the load of the communication amount, and furthermore, the use of voice data prepared in advance can reduce the processing load on the server 20.

The voice data generation system according to an embodiment of the present disclosure has been described above. Next, the configurations of the respective devices included in the voice data generation system according to the present embodiment are described with reference to the drawings.

### <<2. Example Configurations>>

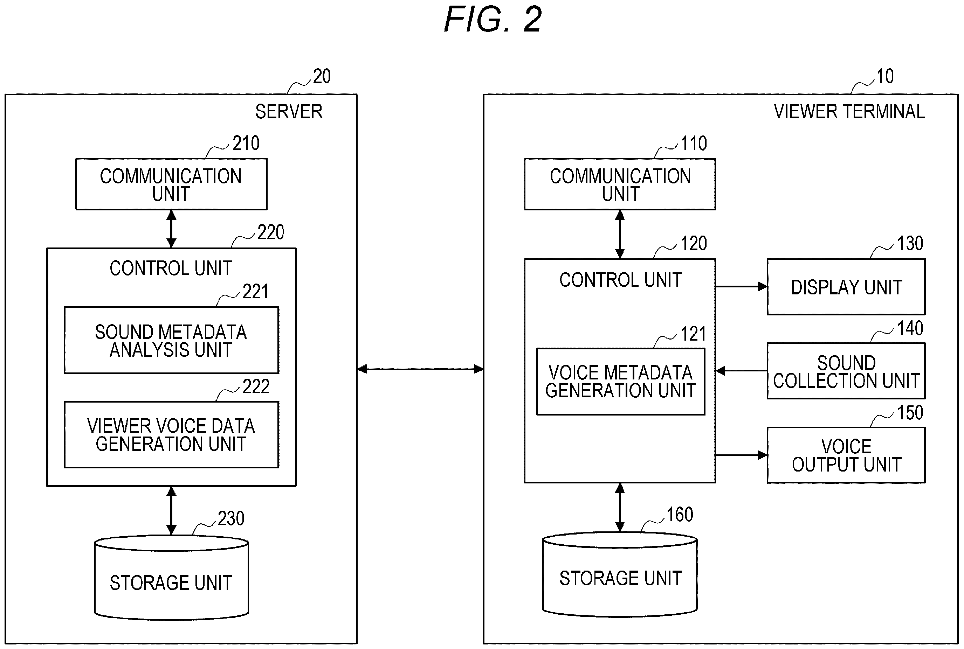

Fig. 2 is a block diagram illustrating an example of configurations of the server 20 and the viewer terminals 10 included in the voice data generation system according to the present embodiment. The server 20 and the viewer terminals 10 are communicably connected via a network, and can transmit and receive data. In the description below, the configurations of the respective devices are described.

### <2-1. Example Configuration of the Server 20>

As illustrated in Fig. 2, the server 20 includes a communication unit 210, a control unit 220, and a storage unit 230.

### (Communication Unit 210)

The communication unit 210 transmits and receives data to and from an external device in a wired or wireless manner. The communication unit 210 is communicably connected to the viewer terminals 10 and the event site device 30, using a wired/wireless local area network (LAN), Wi-Fi (registered trademark), Bluetooth (registered trademark), a mobile communication network (long term evolution (LTE)), a fourth generation mobile communication system (4G), a fifth generation mobile communication system (5G), or the like, for example.

### (Control Unit 220)

The control unit 220 functions as an arithmetic processing unit and a control unit, and controls an overall operation in the server 20 in accordance with various programs. The control unit 220 is formed with an electronic circuit such as a central processing unit (CPU) or a microprocessor, for example. The control unit 220 may also include a read only memory (ROM) that stores programs, arithmetic parameters, and the like to be used, and a random access memory (RAM) that temporarily stores parameters and the like that change as appropriate.

The control unit 220 performs control to transmit a video image and sound of the event site received from the event site device 30 to the viewer terminals 10. For example, the control unit 220 may stream the video image and the sound of the event site where the event is being held in real time, to one or more viewer terminals 10.

The control unit 220 according to the present embodiment also functions as a voice metadata analysis unit 221 and a viewer voice data generation unit 222.

The voice metadata analysis unit 221 analyzes the voice metadata continuously transmitted from each viewer terminal 10. Specific examples of the information included in the voice metadata will be described later. The voice metadata analysis unit 221 analyzes the voice metadata acquired from each viewer terminal 10, and performs, as appropriate, processing such as counting the number of viewers who are cheering. The voice metadata analysis unit 221 outputs an analysis result to the viewer voice data generation unit 222.

The viewer voice data generation unit 222 generates viewer voice data for output, on the basis of the result of the analysis performed by the voice metadata analysis unit 221. At this point of time, the viewer voice data generation unit 222 generates viewer voice data, using voice data prepared in advance (and stored in the storage unit 230, for example). The voice data prepared in advance is cheers (such as "wow", "yay", and "woo-hoo"), for example. Such cheers can be prepared for specific numbers of viewers, for example. That is, a cheer of 20 people, a cheer of 50 people, a cheer of 100 people, and the like are recorded in advance, and the recorded voice data is stored into the storage unit 230.

For example, in generating viewer voice data, the viewer voice data generation unit 222 selects the viewer voice data corresponding to the number of viewers (the number of viewers who are cheering) indicated by the analysis result, from the viewer voice data of specific numbers of viewers prepared in advance. Compared with a case where collected voice data of viewers is subjected to voice processing and is synthesized, it is possible to greatly reduce the processing load on the server 20, by selecting viewer voice data from the viewer voice data of the specific numbers of viewers prepared in advance. Note that the generation of viewer voice data described herein is an example. Variations of methods for generating viewer voice data will be described later.

The control unit 220 performs control to transmit the generated viewer voice data from the communication unit 210 to the viewer terminals 10 and the event site device 30. Note that, to the viewer terminals 10, the control unit 220 may transmit voice data obtained by combining the generated viewer voice data with the voice data of the event site.

The generation and transmission of viewer voice data described above can be continuously performed by the control unit 220. For example, the control unit 220 may perform the generation and transmission every 0.5 seconds.

### (Storage Unit 230)

The storage unit 230 is formed with a read only memory (ROM) that stores programs, arithmetic parameters, and the like to be used for processing by the control unit 220, and a random access memory (RAM) that temporarily stores parameters and the like that change as appropriate. For example, according to the present embodiment, the storage unit 230 stores the voice data to be used for generating viewer voice data.

The configuration of the server 20 has been specifically described, but the configuration of the server 20 according to the present disclosure is not limited to the example illustrated in Fig. 2. For example, the server 20 may be formed with a plurality of devices.

### <2-2. Example Configuration of a Viewer Terminal 10>

As illustrated in Fig. 2, a viewer terminal 10 includes a communication unit 110, a control unit 120, a display unit 130, a sound collection unit 140, a voice output unit 150, and a storage unit 160.

### (Communication Unit 110)

The communication unit 110 transmits and receives data to and from an external device in a wired or wireless manner. The communication unit 110 is communicably connected to the server 20, using a wired/wireless local area network (LAN), Wi-Fi (registered trademark), Bluetooth (registered trademark), a mobile communication network (long term evolution (LTE), a fourth generation mobile communication system (4G), a fifth generation mobile communication system (5G), or the like, for example.

### (Control Unit 120)

The control unit 120 functions as an arithmetic processing unit and a control unit, and controls the overall operation in the viewer terminal 10 in accordance with various programs. The control unit 120 is formed with an electronic circuit such as a central processing unit (CPU) or a microprocessor, for example, the control unit 120 may also include a read only memory (ROM) that stores programs, arithmetic parameters, and the like to be used, and a random access memory (RAM) that temporarily stores parameters and the like that change as appropriate.

The control unit 120 performs control to display, on the display unit 130, the video image of the event site received from the server 20, and control to reproduce, through the voice output unit 150, the sound and the viewer voice data of the event site received from the server 20. From the server 20, the video image and the sound of the event site where an event is being held are streamed in real time, for example.

The control unit 120 according to the present embodiment also functions as a voice metadata generation unit 121. The voice metadata generation unit 121 generates voice metadata indicating information regarding the viewer's voice sound. For example, the voice metadata generation unit 121 generates voice metadata on the basis of sound collection data obtained by the sound collection unit 140 collecting the viewer's voice sound. It is assumed that the viewer emits a cry of joy when viewing a live stream from the event site, and such a cheer (voice sound) is collected by the sound collection unit 140. Further, the voice metadata generation unit 121 may generate voice metadata on the basis of information that is set/measured in advance. The information regarding the viewer's voice sound is the presence or absence of voice sound, the gender of the viewer who has emitted the voice sound, the feeling of the viewer at the time of emission of the voice sound (a specific type of cheering), or the like, for example. Specific contents of the voice metadata will be described later. The voice metadata generation unit 121 continuously generates voice metadata and transmits the voice metadata to the server 20, while a live stream from the event site (for example, a streaming delivery of the video image and sound of the event site) is performed by the server 20. For example, the voice metadata generation unit 121 may generate voice metadata every 0.5 seconds, and transmit the voice metadata to the server 20.

### (Display Unit 130)

The display unit 130 has a function of displaying the video image of the event site, in accordance with an instruction from the control unit 120. For example, the display unit 130 may be a display panel such as a liquid crystal display (LCD) or an organic electro luminescence (EL) display.

### (Sound Collection Unit 140 and Voice Output Unit 150)

The sound collection unit 140 has a function of collecting voice sound of the viewer (user). The sound collection unit 140 outputs the collected voice data to the control unit 120.

The voice output unit 150 has a function of outputting (reproducing) voice data, in accordance with an instruction from the control unit 120. The voice output unit 150 may be designed as a round speaker provided in the viewer terminal 10, or headphones, earphones, or a bone conduction speaker that performs wired/wireless communication with the viewer terminal 10, for example.

### (Storage Unit 160)

The storage unit 160 is formed with a read only memory (ROM) that stores programs, arithmetic parameters, and the like to be used for processing by the control unit 120, and a random access memory (RAM) that temporarily stores parameters and the like that change as appropriate.

The configuration of a viewer terminal 10 has been specifically described, but the configuration of a viewer terminal 10 according to the present disclosure is not limited to the example illustrated in Fig. 2. For example, at least one of the display unit 130, the sound collection unit 140, and the voice output unit 150 may be a separate unit.

### <<3. Operation Process>>

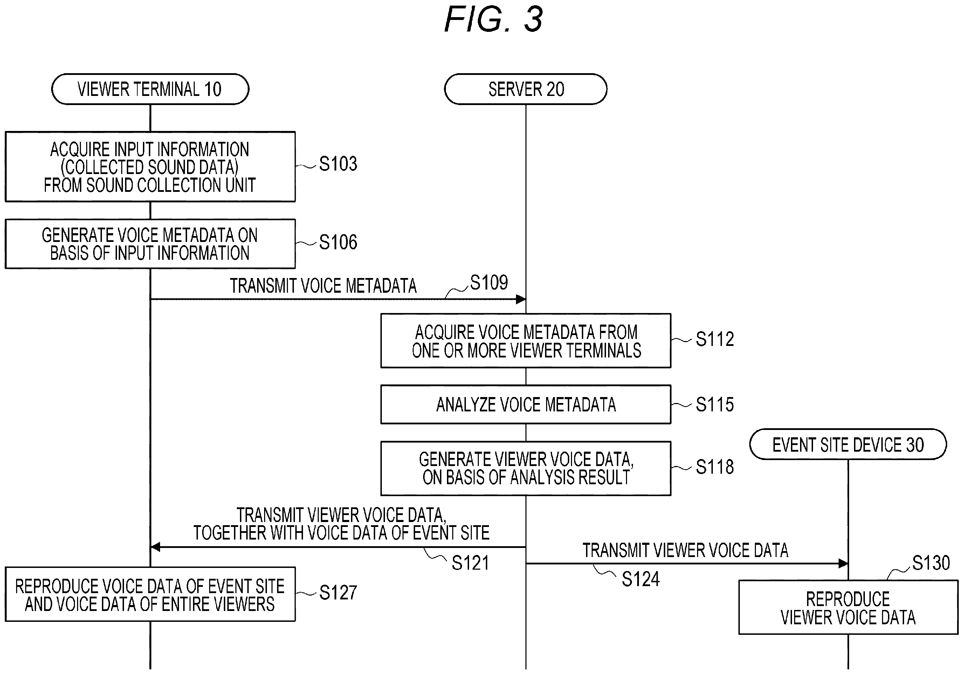

Next, a flow of a voice data generation process according to the present embodiment is specifically described with reference to the drawings. Fig. 3 is a sequence diagram illustrating an example flow in a voice data generation process according to the present embodiment.

First, as illustrated in Fig. 3, each viewer terminal 10 acquires collected sound data (input information) from the sound collection unit 140 (step S103) .

Next, each viewer terminal 10 generates voice metadata on the basis of the input information (collected sound data) (step S106), and transmits the generated voice metadata to the server 20 (step S109).

Next, the server 20 acquires the voice metadata from one or more viewer terminals 10 (step S112), and analyzes the voice metadata (step S115).

Next, the server 20 generates viewer voice data, on the basis of an analysis result (step S118). The viewer voice data can be said to voice data of the entire viewers.

The server 20 then transmits the viewer voice data to each viewer terminal 10, together with the voice data of the event site (received from the event site device 30) (step S121). In the example illustrated in Fig. 3, only one viewer terminal 10 is shown, but the server 20 transmits the viewer voice data to all the viewer terminals 10 (all the viewers) connected for communication. Each viewer terminal 10 reproduces the voice data of the event site and the voice data of the entire viewers (step S127).

The server 20 also transmits the viewer voice data to the event site device 30 (step S124). The event site device 30 reproduces the voice data of the entire viewers with speakers or the like installed in the event site (step S130).

An example flow of the voice data generation process according to the present embodiment has been described. Note that the operation process illustrated in Fig. 3 is an example, and part of the process may be performed in different orders or in parallel, or may not be performed. For example, the process of transmitting the viewer voice data to the event site device 30 is not necessarily performed.

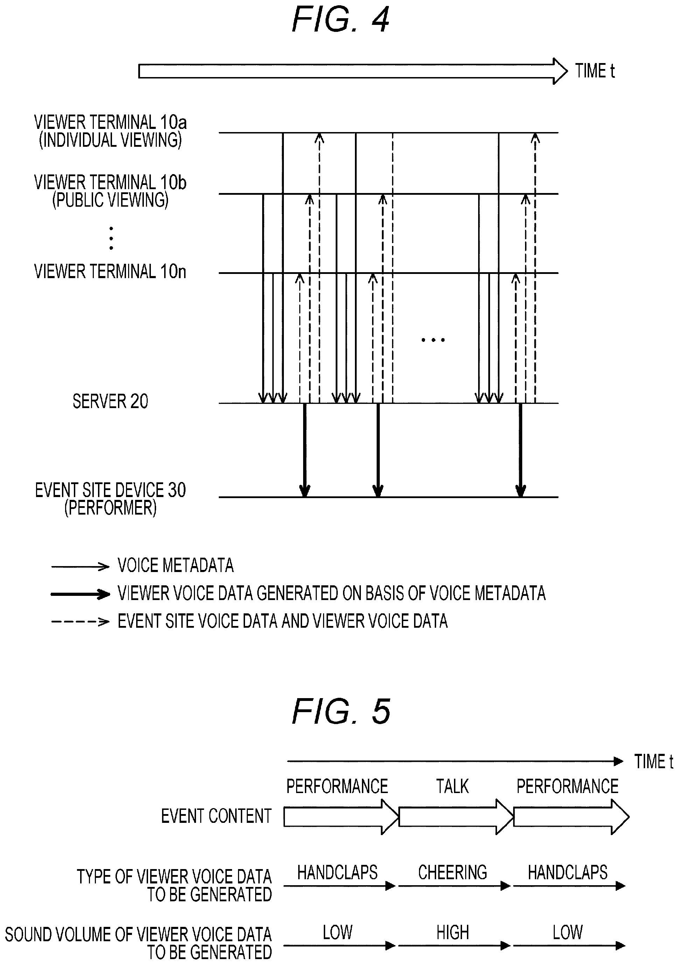

Further, the above process can be continuously performed while a live stream of the event (a real-time delivery of the video image and sound of the event site) is performed by the server 20. Fig. 4 is a diagram for explaining data transmission in the voice data generation process according to the present embodiment. As illustrated in Fig. 4, the server 20 generates viewer voice data (voice data of the entire viewers) on the basis of the voice metadata received from the viewer terminals 10 so far at regular intervals (for example, at intervals of 0.5 seconds), and transmits the viewer voice data to each viewer terminal 10 and the event site device 30. Note that the viewer terminals 10 also include an information processing terminal compatible with a public viewing site. When an event delivery is performed for individuals and the audience at a public viewing site, it is possible to share the individuals' cheers and the cheer of the audience of the public viewing with each other.

For example, the voice metadata includes the presence or absence of voice sound (a cheer), and the server 20 selects and transmits viewer voice data of the number of viewers corresponding to the number of viewers who have emitted the cheer. In this case, there are 50 people who have emitted voice sound in the voice data generation process at a certain timing, and therefore, the cheer of 50 people is selected and transmitted, for example. At the next timing, there are 100 people who have emitted voice sound, and therefore, the cheer of 100 people is selected and transmitted. Thus, it is possible for both the viewers and the performer to recognize that the viewers get gradually excited (the cheer increases) in real time.

### <<4. Specific Examples>>

Next, specific examples of generation of viewer voice data are described.

### <4-1. Viewer Voice Data Generation Depending on the Number of Viewers>

For example, voice metadata includes the presence or absence of voice sound, and the viewer voice data generation unit 222 generates viewer voice data depending on the number of viewers.

The voice metadata generation unit 121 of a viewer terminal 10 analyzes sound data collected by the sound collection unit 140 (voice recognition), determines whether or not the viewer has emitted voice, and generates voice metadata including information indicating the presence or absence of voice sound. In an example of data to be generated, "1" may be assigned as "speaking_flag" if there is voice sound, and "2" may be assigned as "speaking_flag" if there is no voice sound, for example. The viewer terminal 10 determines the presence or absence of voice sound every second, for example, and generates and transmits voice metadata.

The server 20 prepares voice data of specific numbers of viewers in advance. The voice data is a sound source of cheers or cries of joy, for example. The voice metadata analysis unit 221 of the server 20 counts the number of viewers who have emitted voice sound, from the information indicating the presence or absence of voice sound included in the voice metadata transmitted from one or more viewer terminals 10. The viewer voice data generation unit 222 then selects voice data close to the counted number of viewers, from the voice data of the specific numbers of viewers prepared beforehand, and sets the selected voice data as the viewer voice data. The server 20 transmits the viewer voice data generated in this manner to each viewer terminal 10 and the event site device 30.

Thus, even in a live stream without any audience, for example, it is possible to experience a live stream with the cheers of the other viewers (audience). Furthermore, even if a word uttered by a viewer is an inappropriate word, only information indicating whether the viewer has emitted voice sound is used. Accordingly, the inappropriate word is not conveyed directly to the other viewers.

Note that, in the example described above, voice metadata including information indicating that there is no voice sound is transmitted in a case where there is no voice sound. However, the present invention is not limited to this. A viewer terminal 10 may transmit voice metadata including information indicating that there is voice sound, only in a case where there is voice sound.

### <4-2. Viewer Voice Data Generation Depending on Gender or Emotion>

For example, voice metadata includes at least either the gender of the viewer who has emitted voice sound or the emotion determined from the voice sound, and the viewer voice data generation unit 222 generates viewer voice data depending on the gender or the emotion.

The voice metadata generation unit 121 of the viewer terminal 10 analyzes the sound data collected by the sound collection unit 140 (voice recognition), determines whether the voice is a female voice or a male voice, and generates voice metadata including information indicating the gender. Note that, in a case where the gender of the viewer is set in advance, that information may be used. The voice metadata generation unit 121 also analyzes the sound data collected by the sound collection unit 140 (voice recognition), determines an emotion associated with the voice sound, and generates voice metadata including information indicating the emotion. For example, there are various types of cheers. For example, there are a voice of despair, a voice of joy, a voice of excitement, a voice of irritation, a voice of surprise, a scream, and the like, and emotions are associated with them. Also, the voice metadata generation unit 121 may incorporate information indicating the type of cheer into the information indicating the emotion. Further, in a case where the analysis of the collected sound data reveals that the viewer has not emitted any voice sound, the voice metadata generation unit 121 may add information indicating that the viewer has not emitted any voice sound.

In an example of data to be generated, "no voice sound: 0", "depressed: 1", "happy (excited): 2", "screaming: 3", or the like may be given as "emotion_type", for example.

The server 20 prepares voice data of each gender (a sound source of only a female's cheer, a sound source of only a male's cheer, and the like), and voice data of each emotion (a sound source of disappointment, a sound source of joy, a sound source of screams, and the like) in advance. These pieces of voice data may be prepared as voice data of one person, or voice data of a certain number of viewers (for example, 1000 viewers), and some pieces of voice data of specific numbers of viewers may be further prepared.

The viewer voice data generation unit 222 of the server 20 selects the corresponding voice data from the voice data of the respective genders and the voice data of the respective emotions prepared beforehand, in accordance with the information indicating gender or emotion included in the voice metadata transmitted from one or more viewer terminals 10, and generates the viewer voice data. More specifically, the viewer voice data generation unit 222 performs voice synthesis for each piece of voice metadata of each viewer, and collectively generates one set of voice data.

Alternatively, for example, the voice metadata analysis unit 221 counts the number of viewers regarding each emotion. The viewer voice data generation unit 222 then generates voice data of 50 people (or selects voice data of a similar number of viewers) using voice data of disappointment in a case where 50 people are showing an emotion of disappointment, generates voice data of 100 people (or selects voice data of a similar number of viewers) using voice data of delight in a case where 100 people are showing an emotion of delight, and collectively generates eventual viewer voice data. Further, the sound volume or the like of voice data of a certain number of viewers with each emotion prepared in advance may be adjusted in accordance with the ratio of each emotion, and eventual viewer voice data may then be generated. The same applies in the case of gender.

As the viewer voice data can be generated from the voice data of each gender or emotion in this manner, it is possible to obtain reactions only of females or reactions only of males among the viewers to a call of a performer in a live concert, for example. In goal scenes of soccer as another example, there are cases where joy and disappointment occur simultaneously with a score of the supporting team and a score of the opposing team, for example. In that case, viewer voice data including voices of both sides can be generated.

As described above, by reflecting the gender or an emotion of each viewer in generation of viewer voice data, it is possible to bring the reaction of the viewers shared between the viewers or with the performer closer to the actual reaction.

### <4-3. Viewer Voice Data Generation Depending on Characteristics>

To further bring the viewer voice data to be generated closer to the actual reaction, the characteristics of the viewer's voice (gender, voice pitch (high or low), tone (light or heavy), and the like) may be used, for example.

Each viewer terminal 10 analyzes the characteristics of the viewer's voice in advance, and generates characteristics information. Information indicating the gender of the viewer and the characteristics of voice is then incorporated into the voice metadata. These pieces of information are also referred to as voice generation parameters.

For each piece of voice metadata transmitted from one or more viewer terminals 10, the viewer voice data generation unit 222 of the server 20 adjusts, as appropriate, default voice data prepared in advance on the basis of the information indicating the characteristics of the voice, generates viewer voice data, and collectively generates one set of voice data. As a result, it is possible to generate a cheer that reflects the characteristics of the viewer's voice and is closer to the actual cheer, instead of the originally prepared cheer.

### (Modification 1)

The voice metadata described above may further include emotion information (a type of cheer) determined from voice sound, in addition to the gender of the viewer and the characteristics of the voice. With this arrangement, when voice data of each viewer is generated, voice data depending on emotions can be generated.

The voice metadata may further include sound volume information about voice sound emitted by the viewer. With this arrangement, when voice data of each viewer is generated, voice data depending on the sound volume of actual voice sound can be generated.

### (Modification 2)

A viewer may set the above characteristics of the viewer's voice as desired. As a result, it is possible to give a cheer (emit a cry of joy) with a tone different from the actual tone of one's voice. For example, a male may use a female voice. Also, selection may be made from voice generation parameters (for example, voice generation parameters of a celebrity) prepared in advance on the delivery provider side. Further, the voice generation parameters prepared on the delivery provider side may be separately sold, or may be attached only to a ticket for a specific event. As a result, the voice generation parameters can be used as an item for revenue of the event on the deliver provider side.

### (Modification 3)

Also, variations of the voice generation parameters to be handled may be limited. The voice metadata generation unit 121 of each viewer terminal 10 selects the characteristics of the voice of the viewer from voice generation parameters prepared in advance, and incorporates the characteristics into the voice metadata. As a result, in the server 20, the processing load of generating voice data for each viewer is reduced. For example, the voice metadata analysis unit 221 of the server 20 counts the number of viewers for each voice generation parameter among the viewers who has emitted voice sound, and the viewer voice data generation unit 222 generates viewer voice data, using the voice generation parameters prepared in advance and the voice data of specific numbers of viewers.

Also, both the process of selecting from the voice generation parameters prepared in advance and the process using the characteristics of the viewer's voice may be performed. In this case, as an item for revenue of the event on the delivery provider side, for example, a function of reflecting the characteristics of the viewer's voice may be sold only to specific viewers.

### <4-4. Viewer Voice Data Generation Depending on Viewing Environments>

The voice metadata may further include information about the presence or absence of voice sound as above, and sound volume information about voice sound emitted by the viewer. In this case, the server 20 can generate viewer voice data, taking into consideration the sound volume information about the actual voice emitted by the viewer. Here, in some viewing environment, there may be a case where a loud voice cannot be emitted, and the volume of voice is low. In a case where there are many viewers in a viewing environment in which a loud voice cannot be emitted, the sound volume of the generated viewer voice data is also low. Therefore, in each viewer terminal 10, the maximum volume value of the viewer's voice (the maximum sound volume of voice that can be emitted by the viewer) may be measured in advance, and be incorporated into the voice metadata. For example, in addition to the information indicating the presence or absence of voice sound, the voice metadata generation unit 121 of the viewer terminal 10 incorporates information indicating the sound volume of the actual voice sound and the information indicating the maximum sound volume measured in advance into the voice metadata, and transmits the voice metadata to the server 20.

Note that, although a case where the maximum sound volume is actually measured has been described, the present embodiment is not limited to this, and the maximum sound volume may be set by the viewer, for example. Also, the voice metadata generation unit 121 may also acquire beforehand the value measured at a specific timing (such as the timing at which the performer shows up on stage, for example, in the case of a live concert) at which the voice is assumed to be the loudest in the event, and use the value as the maximum sound volume.

Further, when generating voice data for the respective viewers on the basis of the respective pieces of the voice metadata, the viewer voice data generation unit 222 of the server 20 may set a sound volume higher than the sound volume of the voice actually emitted by the user, taking the maximum sound volume into consideration. Also, the viewer voice data generation unit 222 may set a maximum sound volume setting value A for voice data that can be generated by the viewer voice data generation unit 222, and adjust, as appropriate, the maximum sound volume of the voice metadata to be the same as the maximum sound volume setting value A.

### <4-5. Viewer Voice Data Generation Depending on the Number of Viewers Present at the Same Place>

In each of the specific examples described above, it is assumed that each viewer terminal 10 generates voice metadata for one viewer. However, there are cases where several persons such as family members or friends view the same content. In this case, it is possible to adopt a method by which each viewer terminal 10 recognizes the persons viewing the content through voice recognition and with a camera or the like, for example, and then generates voice metadata of the number of the persons. Further, a field indicating the number of viewers may be added to the voice metadata to indicate the number of viewers, and the other pieces of the voice metadata may be combined into information about one person.

Furthermore, in a case where gender information is incorporated into the voice metadata, information indicating that both males and females are included, or information indicating the ratio between males and females may be used.

In a case where information indicating the number of viewers is included in one piece of voice metadata, the voice metadata analysis unit 221 of the server 20 performs a process of setting the viewer count to that number of viewers, instead of 1.

### <4-6. Viewer Voice Data Generation Depending on Virtual Seat Areas>

The voice metadata may include information indicating a virtual seat area (viewing position) in the event site. In an actual live concert or the like, the viewing position is also an element of enjoyment of the event, and there are cases where the performer may also request a reaction associated with the viewing position (for example, the performer calls the audience in the second floor seats to give a cheer). The virtual seat area may be set in advance for each viewer, or the viewer may select an appropriate area. The viewer terminal 10 incorporates information indicating the presence or absence of voice sound and information indicating the virtual seat area into the voice metadata, for example.

The voice metadata analysis unit 221 of the server 20 counts the number of viewers who have emitted voice in each virtual seat area, and the viewer voice data generation unit 222 selects the voice data corresponding to the number of viewers in each virtual seat area, to generate viewer voice data. The control unit 220 of the server 20 then associates the generated viewer voice data with information indicating the virtual seat area, and transmits the generated viewer voice data to the event site device 30. The event site device 30 controls a plurality of speakers installed in audience seats in the event site to reproduce the viewer voice data of the virtual seat areas corresponding to the positions of the respective speakers. As a result, the performer can grasp the cheer at each position of the audience.

Note that the viewer voice data generation unit 222 may generate voice data for each viewer on the basis of the respective pieces of the voice metadata, and collectively generate the viewer voice data for each virtual viewing area.

The server 20 may also transmit viewer voice data associated with information about the virtual seat area to each viewer terminal 10. When reproducing the viewer voice data, each viewer terminal 10 may perform a process of localizing a sound source to a position corresponding to the virtual seat area, on the basis of information indicating the virtual seat area in each piece of viewer voice data. As a result, the viewer can also experience the same atmosphere as that being experienced by a person viewing in a seat in the actual site.

### <4-7. Viewer Voice Data Generation Depending on Validity/Invalidity of the Sound Collection Unit>

In each of the specific example described above, the voice metadata is generated on the basis of input information (collected sound data) from the sound collection unit 140. However, a viewer terminal 10 does not include the sound collection unit 140 or is not connected to the sound collection unit 140 in some cases, and there are cases where some viewers have to quietly view the content, depending on environments. In this case, there is a possibility that the viewer voice data generated by the server 20 includes cheers of a smaller number of viewers than the actual number of viewers.

Therefore, the voice metadata includes information regarding the sound collection unit 140. For example, the sound collection unit 140 includes information about validity (ON/OFF). With this arrangement, the viewer voice data generation unit 222 of the server 20 generates the viewer voice data, on the basis of the ratio of the number of viewers having emitted voice sound among the viewers whose sound collection unit 140 is ON (in a valid or available state), for example, assuming that a similar ratio of viewers is the number of viewers having emitted voice sound among the viewers whose sound collection unit 140 is OFF (in an invalid or unavailable state). Thus, it is possible to generate the viewer voice data, taking into consideration the number of users who cannot use the sound collection unit 140 (users who cannot emit voice sound). Note that the information regarding the viewers whose sound collection unit 140 is OFF is not limited to the number of viewers having emitted voice sound, the voice metadata of the viewers whose sound collection unit 140 is ON may be applied, as appropriate, to the ratio of gender, the type of cheer, the loudness of voice, the characteristics of voice, and the like, for example.

Further, taking into consideration cases where the viewer has to quietly view the content depending on the environment, each viewer terminal 10 may analyze the movement of the viewer captured by a camera, and incorporates the result of the analysis into the voice metadata. For example, there may be a case where, due to an environment where voice sound cannot be emitted, a feeling of excitement is shown with quiet handclaps (such as handclaps without the hands actually hitting each other) or an action of waving a hand. The viewer terminal 10 may grasp such movement of the viewer through image analysis, determine that there is voice sound and the type of cheer is "delight" or the like, and generate the voice metadata.

### <4-8. Viewer Voice Data Generation Depending on Scenes in the Event>

For example, in the case of a live concert, there may be times when a cheer from the viewers is preferably small, as it is desired to concentrate on listening to the song as much as possible during the rendition of the song. On the other hand, it can be said that the interval between tunes is a timing at which the performer and the audience check the level of excitement. Also, in sports events, there are games in which it is good manners to be quiet when the player makes a play, and there are games in which the player requests clapping or the like. As described above, the desired sound volume of voice varies with each scene in an event, and furthermore, clapping is preferable to cheering in some cases.

Therefore, the viewer voice data generation unit 222 of the server 20 may change the sound volume of the viewer voice data to be generated, and the type of the viewer voice data (cheers, clapping, or the like), depending on the scene in the event. What kind of voice data is to be generated in which scene may be controlled on the server side in real time, may be changed at a preset time, or may be changed in accordance with voice from the performer side. Fig. 5 is a diagram for explaining control for changing the viewer voice data depending on scenes in an event. As illustrated in Fig. 5, the viewer voice data may be changed to "type: clapping" and "volume: low" during performance in an event, and be changed to "type: cheering" and "volume: high" during talking, for example. In this manner, the event can be staged with the viewer voice data.

### <4-9. Viewer Voice Data Generation Depending on Labeling>

In the present embodiment, labeling information about the categories to which the viewers belongs is set, so that viewer voice data customized for each viewer can be provided. That is, for each viewer, viewer voice data corresponding to labeling information about the same category as the viewer can be emphasized and provided.

For example, the voice metadata generation unit 121 of each viewer terminal 10 adds information about the team the viewer supports in a soccer game, as labeling information to the voice metadata. Next, the viewer voice data generation unit 222 of the server 20 generates viewer voice data for each piece of the labeling information. The control unit 220 of the server 20 then transmits the viewer voice data having the same labeling information as the viewer to the viewer terminal 10 of the viewer. As a result, the viewer can mainly listen to the cheers from the people who support the same soccer team, and can have an experience as if watching the game among the supporters of the team the viewer supports. Not only with a soccer team but also in a live concert, for example, information about the performer of interest is added as labeling information to the voice metadata, so that viewer voice data in which the cheers for the performer are emphasized can be provided to the viewer. Note that the viewer voice data generation unit 222 may generate, for each piece of labeling information, overall viewer voice data in which the viewer voice data having the labeling information is emphasized (the sound volume is increased).

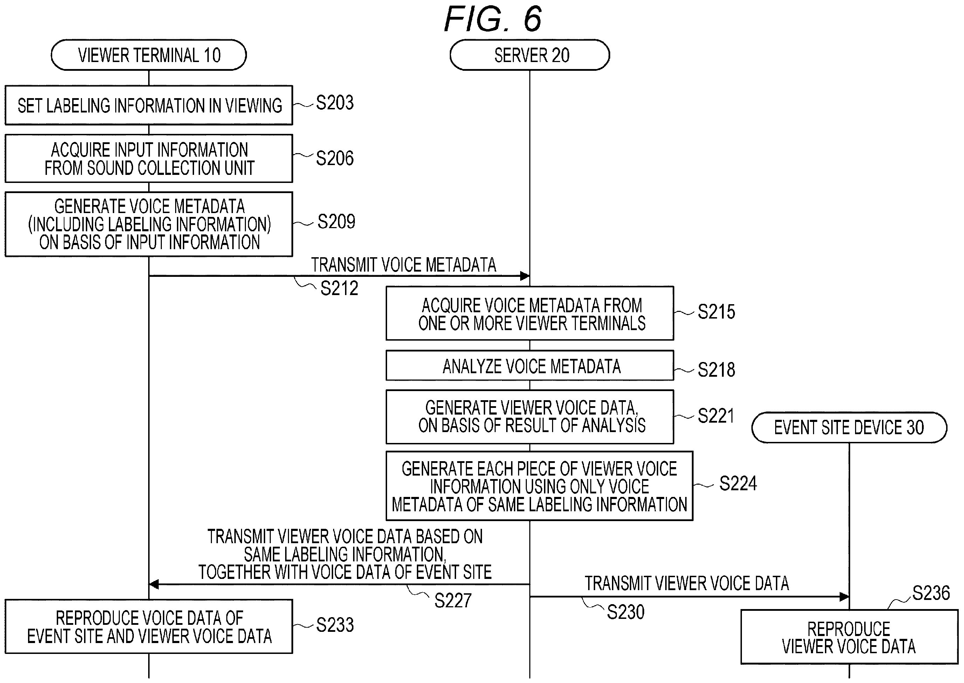

In the description below, a voice data generation process using labeling information is described with reference to Fig. 6. Fig. 6 is a sequence chart illustrating an example flow in a voice data generation process using labeling information according to the present embodiment.

As illustrated in Fig. 6, first, the viewer terminal 10 sets labeling information in viewing (step S203). The labeling information may be set on the basis of selection by the viewer.

Next, the viewer terminal 10 acquires collected sound data (input information) from the sound collection unit 140 (step S206).

Next, the viewer terminal 10 generates voice metadata on the basis of the input information (collected sound data), further incorporates the labeling information into the voice metadata (step S209), and transmits the voice metadata to the server 20 (step S212) .

Subsequently, in steps S215 to S221, processing similar to the processing in steps S112 to S118 in Fig. 3 is performed. That is, the control unit 220 of the server 20 generates viewer voice data, on the basis of the voice metadata acquired from one or more viewer terminals 10.

Next, the control unit 220 also generates each piece of viewer voice data using only the voice metadata having the same labeling information (step S224).

Together with the voice data of the event site (received from the event site device 30), the server 20 then transmits, to each viewer terminal 10, the viewer voice data based on the same labeling information as the labeling information about each viewer (step S227). The server 20 may transmit only the viewer voice data based on the same labeling information as the viewer's labeling information to the viewer terminal 10. Also, the server 20 may generate overall viewer voice data in which the viewer voice data based on the same labeling information is emphasized, and transmit the overall viewer voice data to the viewer terminal 10. The viewer terminal 10 reproduces the voice data of the event site and the viewer voice data (step S233).

The server 20 also transmits the viewer voice data to the event site device 30 (step S230). Such viewer voice data is the voice data generated in step S221 described above. The event site device 30 reproduces the voice data of the entire viewers with speakers or the like installed in the event site (step S236).

The voice data generation process using labeling information has been described above. Note that the operation process illustrated in Fig. 6 is an example, and the present disclosure is not limited to this.

### <4-10. Combined Use of Voice Data and Voice Metadata>

Event deliveries of the present embodiment is not limited to deliveries to individuals, and there are cases where an event is delivered to a site where several thousands to several tens of thousands of people are present as in public viewing. As the voice data of the public viewing site, voice data collected in the site may be transmitted directly to the server 20, and be combined with voice data (voice data generated on the basis of voice metadata) of other individual viewers. Since it is assumed that there are several public viewing sites, and voices of several thousands to several tens of thousands of people can be converted into one set of voice data, it can be said that the communication capacity and the load of the processing amount are not large as those in a case where voice data of several thousands to several tens of thousands of people is individually transmitted and processed.

As described above, in the present embodiment, voice data and voice information metadata can be used in combination.

Also, only specific individual viewers (viewers who have purchased a premium ticket, for example) may be allowed to transmit voice data obtained by collecting voice sound, to the server 20. With the processing amount in the server 20 taken into consideration, the number of viewers to which voice data can be transmitted is adjusted in advance, so that various services can be provided to viewers without a long delay.

### <4-11. Use of Voice Metadata in an Archive Delivery>

Each of the above specific examples involves a so-called live stream in which an event delivery is conducted in real time. However, the present embodiment is not limited to this, and such an event deliver might be conducted as an archive delivery at a later date.

In this case, the control unit 220 of the server 20 may also store the voice metadata acquired from each viewer terminal 10 at the time of the live stream, and, at the time of the archive delivery, generate and distribute viewer voice data using the voice metadata that has not been used at the time of the live stream. The voice data may include the various kinds of information described above, such as the presence or absence of voice sound, gender, an emotion, characteristics of voice, loudness of voice, the maximum sound volume, the number of viewers, a virtual seat area, effectiveness of the sound collection unit 140, and labeling information. At the time of a live stream, at least some of these kinds of information (for example, only the presence or absence of voice sound) is used to generate viewer voice data, with the processing load and the like taken into consideration. At the time of an archive delivery, the other various kinds of information is used, as appropriate, to generate and distribute viewer voice data.

### <<5. Additional Notes>>

The preferred embodiment of the present disclosure has been described above in detail with reference to the accompanying drawings, but the present technology is not limited to such an example. It is obvious that those with ordinary skill in the technical field of the present disclosure can conceive various alterations or corrections within the scope of the technical idea recited in the claims, and it is naturally understood that these alterations or corrections also fall within the technical scope of the present disclosure.

For example, the sound data of the event site and the viewer voice data to be transmitted from the server 20 to a viewer terminal 10 can be generated as different sound sources, and the viewer can erase either the voice data of the event site or the viewer voice data and reproduce the remaining data, as appropriate, in a live stream or an archive delivery.

Also, the respective specific examples described above may be combined as appropriate. Further, the voice metadata may include at least one item of the presence or absence of voice sound, gender, an emotion, characteristics of voice, loudness of voice, the maximum sound volume, the number of viewers, a virtual seat area, effectiveness of the sound collection unit 140, labeling information, and the like.

Also, the temporal length of voice sound may be included as other information included in the voice metadata. For example, information indicating whether the voice is momentary sound or a voice sound having a certain length, or the like can be included.

Further, it is also possible to create one or more computer programs for causing hardware such as a CPU, a ROM, and a RAM included the server 20 or the viewer terminal 10 described above to exhibit the functions of the server 20 or the viewer terminal 10. Furthermore, a computer-readable storage medium that stores the one or more computer programs is also provided.

Further, the effects disclosed in the present specification are merely illustrative or exemplary, but are not restrictive. That is, the technology according to the present disclosure may achieve other effects obvious to those skilled in the art from the description in the present specification, in addition to or instead of the effects described above.

Note that the present technology can also have the following configurations.
(1) An information processing device including a control unit that acquires voice metadata indicating information regarding voice sound of a viewer from one or more information processing terminals in real time, and, on the basis of the acquired voice metadata, performs control to generate viewer voice data for output, using voice data prepared in advance.
(2) The information processing device of (1), in which the voice metadata is generated on the basis of a result of analysis of sound data collected by a sound collection unit that collects voice sound of the viewer, when data of an event being held is delivered in real time.
(3) The information processing device of (2), in which
   the voice metadata includes information indicating presence or absence of the voice sound, and
   the control unit counts the number of viewers having emitted voice, on the basis of the information indicating presence or absence of the voice sound, selects voice data close to the counted number of viewers from among voice data of specific numbers of viewers prepared in advance, and generates the viewer voice data.
(4) The information processing device of (2), in which
   the voice metadata includes information indicating gender of the viewer who has emitted the voice sound, and
   the control unit selects voice data corresponding to the gender from among gender-specific voice data prepared in advance, on the basis of the information indicating the gender of the viewer who has emitted the voice sound, and generates the viewer voice data.
(5) The information processing device of any one of (2) to (4), in which
   the voice metadata includes information indicating an emotion determined from a result of analysis of the voice sound, and
   the control unit selects voice data corresponding to the emotion from among emotion-specific voice data prepared in advance, on the basis of the information indicating the emotion, and generates the viewer voice data.
(6) The information processing device of any one of (2) to (5), in which
   the voice metadata includes information that is generated from a result of analysis of the voice sound and indicates characteristics of the voice sound, and
   the control unit causes voice data prepared in advance to reflect the characteristics, and generates the viewer voice data.
(7) The information processing device of any one of (2) to (5), in which
   the voice metadata includes information indicating characteristics the viewer has set as characteristics of the voice sound, and
   the control unit causes voice data prepared in advance to reflect the characteristics, and generates the viewer voice data.
(8) The information processing device of any one of (2) to (5), in which
   the voice metadata includes information indicating characteristics selected as characteristics of the voice sound from among characteristics variations prepared in advance, and
   the control unit selects voice data reflecting the characteristics from among voice data prepared in advance, and generates the viewer voice data.
(9) The information processing device of any one of (2) to (8), in which
   the voice metadata further includes information indicating a volume of the voice sound, the volume of the voice sound being determined from a result of analysis of the voice sound, and
   the control unit generates the viewer voice data reflecting the volume of the voice sound of each viewer.
(10) The information processing device of (9), in which
   the voice metadata further includes information about a maximum sound volume for the viewer who has emitted the voice sound, and
   the control unit generates the viewer voice data further reflecting the maximum volume value of each viewer.
(11) The information processing device of (9), in which
   the voice metadata further includes information about a maximum sound volume for the viewer who has emitted the voice sound, and
   the control unit adjusts the maximum sound volume to the same volume as a preset maximum sound volume setting value, and generates and outputs the viewer voice data.
(12) The information processing device of (2), in which
   the voice metadata includes information about the number of viewers who have emitted the voice sound and are present in the same place, and
   the control unit selects voice data close to the number of viewers from among voice data of specific numbers of viewers prepared in advance, and generates the viewer voice data.
(13) The information processing device of any one of (2) to (11), in which
   the voice metadata further includes information indicating a virtual seat area of the viewer who has emitted the voice sound, and
   the control unit further generates the viewer voice data for the virtual seat area of each viewer.
(14) The information processing device of any one of (2) to (13), in which
   the voice metadata further includes information indicating whether or not the sound collection unit that collects the voice sound is valid, and
   the control unit counts the number of viewers having emitted voice after adopting a ratio of the number of viewers having emitted voice among respective viewers whose sound collection unit is valid as a ratio of a deemed number of viewers having emitted voice among respective viewers whose sound collection unit is invalid, selects voice data close to the counted number of viewers having emitted voice from among voice data of specific numbers of viewers prepared in advance, and generates the viewer voice data.
(15) The information processing device of any one of (2) to (14), in which
   the voice metadata further includes labeling information about a category to which a viewer belongs, and
   the control unit generates the viewer voice data for each category, and outputs the viewer voice data corresponding to the viewer's category, to the information processing terminal of the viewer.
(16) The information processing device of any one of (1) to (15), in which the control unit changes at least one of a type and a volume of the viewer voice data to be generated, in accordance with a scene in an event to be delivered to each viewer.
(17) The information processing device of any one of (1) to (16), in which the control unit outputs the generated viewer voice data to the information processing terminal and an event site device.
(18) The information processing device of any one of (1) to (17), in which the control unit combines voice data acquired from a public viewing site with viewer voice data generated on the basis of the voice metadata, and outputs the combined voice data to the information processing terminal and an event site device.
(19) An information processing method implemented by a processor,
   the information processing method including: acquiring voice metadata indicating information regarding voice sound of a viewer from one or more information processing terminals in real time; and, on the basis of the acquired voice metadata, performing control to generate viewer voice data for output, using voice data prepared in advance.
(20) A storage medium storing a program,
   the program causing a computer to function as a control unit that acquires voice metadata indicating information regarding voice sound of a viewer from one or more information processing terminals in real time, and, on the basis of the acquired voice metadata, performs control to generate viewer voice data for output, using voice data prepared in advance.

### REFERENCE SIGNS LIST

- 10: Viewer terminal
- 110: Communication unit
- 120: Control unit
- 121: Voice metadata generation unit
- 130: Display unit
- 140: Sound collection unit
- 150: Voice output unit
- 160: Storage unit
- 20: Management server
- 210: Communication unit
- 220: Control unit
- 221: Voice metadata analysis unit
- 222: Viewer voice data generation unit
- 230: Storage unit

## Claims

1. An information processing device comprising a control unit that acquires voice metadata indicating information regarding voice sound of a viewer from one or more information processing terminals in real time, and, on a basis of the acquired voice metadata, performs control to generate viewer voice data for output, using voice data prepared in advance.

2. The information processing device according to claim 1, wherein the voice metadata is generated on a basis of a result of analysis of sound data collected by a sound collection unit that collects voice sound of the viewer, when data of an event being held is delivered in real time.

3. The information processing device according to claim 2, wherein
the voice metadata includes information indicating presence or absence of the voice sound, and
the control unit counts the number of viewers having emitted voice, on a basis of the information indicating presence or absence of the voice sound, selects voice data close to the counted number of viewers from among voice data of specific numbers of viewers prepared in advance, and generates the viewer voice data.

4. The information processing device according to claim 2, wherein
the voice metadata includes information indicating gender of the viewer who has emitted the voice sound, and
the control unit selects voice data corresponding to the gender from among gender-specific voice data prepared in advance, on a basis of the information indicating the gender of the viewer who has emitted the voice sound, and generates the viewer voice data.

5. The information processing device according to claim 2, wherein
the voice metadata includes information indicating an emotion determined from a result of analysis of the voice sound, and
the control unit selects voice data corresponding to the emotion from among emotion-specific voice data prepared in advance, on a basis of the information indicating the emotion, and generates the viewer voice data.

6. The information processing device according to claim 2, wherein
the voice metadata includes information that is generated from a result of analysis of the voice sound and indicates characteristics of the voice sound, and
the control unit causes voice data prepared in advance to reflect the characteristics, and generates the viewer voice data.

7. The information processing device according to claim 2, wherein
the voice metadata includes information indicating characteristics the viewer has set as characteristics of the voice sound, and
the control unit causes voice data prepared in advance to reflect the characteristics, and generates the viewer voice data.

8. The information processing device according to claim 2, wherein
the voice metadata includes information indicating characteristics selected as characteristics of the voice sound from among characteristics variations prepared in advance, and
the control unit selects voice data reflecting the characteristics from among voice data prepared in advance, and generates the viewer voice data.

9. The information processing device according to claim 2, wherein
the voice metadata further includes information indicating a volume of the voice sound, the volume of the voice sound being determined from a result of analysis of the voice sound, and
the control unit generates the viewer voice data reflecting the volume of the voice sound of each viewer.

10. The information processing device according to claim 9, wherein
the voice metadata further includes information about a maximum sound volume for the viewer who has emitted the voice sound, and
the control unit generates the viewer voice data further reflecting the maximum volume value of each viewer.

11. The information processing device according to claim 9, wherein
the voice metadata further includes information about a maximum sound volume for the viewer who has emitted the voice sound, and
the control unit adjusts the maximum sound volume to the same volume as a preset maximum sound volume setting value, and generates and outputs the viewer voice data.

12. The information processing device according to claim 2, wherein
the voice metadata includes information about the number of viewers who have emitted the voice sound and are present in the same place, and
the control unit selects voice data close to the number of viewers from among voice data of specific numbers of viewers prepared in advance, and generates the viewer voice data.

13. The information processing device according to claim 2, wherein
the voice metadata further includes information indicating a virtual seat area of the viewer who has emitted the voice sound, and
the control unit further generates the viewer voice data for the virtual seat area of each viewer.

14. The information processing device according to claim 2, wherein
the voice metadata further includes information indicating whether or not the sound collection unit that collects the voice sound is valid, and
the control unit counts the number of viewers having emitted voice after adopting a ratio of the number of viewers having emitted voice among respective viewers whose sound collection unit is valid as a ratio of a deemed number of viewers having emitted voice among respective viewers whose sound collection unit is invalid, selects voice data close to the counted number of viewers having emitted voice from among voice data of specific numbers of viewers prepared in advance, and generates the viewer voice data.

15. The information processing device according to claim 2, wherein
the voice metadata further includes labeling information about a category to which a viewer belongs, and
the control unit generates the viewer voice data for each category, and outputs the viewer voice data corresponding to the viewer's category, to the information processing terminal of the viewer.

16. The information processing device according to claim 1, wherein the control unit changes at least one of a type and a volume of the viewer voice data to be generated, in accordance with a scene in an event to be delivered to each viewer.

17. The information processing device according to claim 1, wherein the control unit outputs the generated viewer voice data to the information processing terminal and an event site device.

18. The information processing device according to claim 1, wherein the control unit combines voice data acquired from a public viewing site with viewer voice data generated on a basis of the voice metadata, and outputs the combined voice data to the information processing terminal and an event site device.

19. An information processing method implemented by a processor,
the information processing method comprising:
acquiring voice metadata indicating information regarding voice sound of a viewer from one or more information processing terminals in real time; and, on a basis of the acquired voice metadata, performing control to generate viewer voice data for output, using voice data prepared in advance.

20. A storage medium storing a program,
the program causing a computer to function as a control unit that acquires voice metadata indicating information regarding voice sound of a viewer from one or more information processing terminals in real time, and, on a basis of the acquired voice metadata, performs control to generate viewer voice data for output, using voice data prepared in advance.
